# FASCICULE DE BREVET EUROPEEN

(11) **EP 4 308 349 B1**
(45) Date de publication et mention de la délivrance du brevet: **13.08.2025**
(21) Numéro de dépôt: 22713710.6
(22) Date de dépôt: 10.03.2022
(51) Int. Cl.: B25J 21/02, B01L 1/04, G21F 7/04, G21F 7/06, B01L 1/02

(54) **SYSTEME DE TRANSFERT POUR ENCEINTE ETANCHE COMPORTANT UN DISPOSITIF DE CONNEXION ETANCHE AVEC UN VOLUME CLOS**
TRANSFERSYSTEM FÜR EINEN DICHTEN BEHÄLTER MIT EINER DICHTEN VERBINDUNGSVORRICHTUNG ZUM VERBINDEN MIT EINEM GESCHLOSSENEN VOLUMEN
TRANSFER SYSTEM FOR A SEALED ENCLOSURE HAVING A SEALED CONNECTION DEVICE FOR CONNECTING TO AN ENCLOSED VOLUME

(30) Priorité: 15.03.2021 FR 2102528
(43) Date de publication de la demande: 24.01.2024
(73) Titulaire: Getinge Life Science France, 41100 Vendôme (FR)
(72) Inventeur: MOTTIER, Emmanuel, 41100 Aze (FR); CORDIER, Florentin, 41100 Saint Firmin des Prés (FR)
(74) Mandataire: Brevalex
(86) Numéro de dépôt international: PCT/FR2022/050428
(87) Numéro de publication internationale: WO 2022/195200

(56) Documents cités:
- EP-A1- 3 581 339
- EP-B1- 3 496 766
- US-A- 5 049 029
- US-A9- 2016 376 044
- US-B2- 8 950 624
- US-B2- 9 283 556

## Description

### DOMAINE TECHNIQUE ET ÉTAT DE LA TECHNIQUE ANTÉRIEURE

La présente demande se rapporte à un système de transfert pour une enceinte étanche délimitant un volume clos destiné à être connecté à un autre volume clos, l'enceinte étanche comportant un dispositif de connexion étanche entre les deux volumes clos. La présente invention se rapporte également à un procédé d'actionnement dudit système de transfert.

Dans un certain nombre de secteurs industriels, parmi lesquels on citera les secteurs pharmaceutique, médical, agroalimentaire et nucléaire, il est nécessaire ou souhaitable d'effectuer certaines tâches dans une atmosphère confinée, soit afin de protéger le personnel, par exemple de la radioactivité, de la toxicité..., soit au contraire de pouvoir effectuer ces tâches dans une atmosphère aseptique ou exempte de poussière, soit enfin les deux simultanément.

Le transfert d'appareil ou de produit d'un volume clos à l'autre, sans qu'à aucun moment l'étanchéité de chacun de ces volumes vis-à-vis de l'extérieur ne soit rompue, pose un problème délicat à remplir. Ce problème peut être résolu par un dispositif de connexion à double porte.

Un tel dispositif à double porte muni d'une commande à multiples sécurités est par exemple connu du document FR 2 695 343. Chaque volume est clos par une porte montée dans une bride. Chaque porte est solidarisée à sa bride par une liaison baïonnette et les deux brides sont destinées à être solidarisées l'une à l'autre par une liaison baïonnette. Ce système est également désigné RTP pour « Rapid transfer port » en terminologie anglo-saxonne.

Dans le cas où l'un des volumes clos est formé par un conteneur et l'autre volume par une enceinte, par exemple une boîte à gants, le transfert s'effectue de la manière suivante. La bride du conteneur comporte sur sa périphérie extérieure des oreilles destinées à coopérer avec une empreinte de la bride de la boîte à gant. La bride du conteneur est introduite dans la bride de la boîte à gant, le conteneur est orienté de sorte à faire correspondre les oreilles avec l'empreinte. Une première rotation du conteneur suivant l'axe de sa porte permet de solidariser la bride du conteneur à la bride de la boîte à gant par la liaison baïonnette. Au moyen d'une deuxième rotation du conteneur, suivant le même axe et en continuité avec la première rotation, la porte du conteneur est pivotée par rapport au conteneur, assurant à la fois une solidarisation par une autre liaison baïonnette avec la porte de la boîte à gant et une désolidarisation du nouvel ensemble formé par les deux portes accolées vis-à-vis des brides de porte et de boîte à gant. Une commande à poignée située dans la boîte à gant permet de déverrouiller un mécanisme de sécurité et de libérer le passage entre les deux volumes. Dans le cas d'une atmosphère aseptique, les faces extérieures des deux portes étant en contact l'une avec l'autre de manière étanche, elles ne peuvent contaminer l'intérieur des volumes ou être contaminées par l'environnement intérieur de la boîte à gants.

La bride de conteneur comporte un joint qui, lorsqu'elle est solidarisée avec la bride de la boîte à gant, délimite avec les deux brides le passage entre l'intérieur du conteneur et l'intérieur de la boîte à gants. La pointe du joint de la bride de conteneur qui n'est pas en contact avec la bride de la boîte à gant est appelé « anneau de contamination » ou « ring of concern ». Il faut veiller à l'intégrité du joint de la bride de conteneur et privilégier d'éviter le contact avec l'anneau de contamination lors du transfert, pour éviter la contamination de l'enceinte.

Ce type d'enceinte est utilisé pour la fabrication de produits sous atmosphère contrôlée, par exemple dans le domaine pharmaceutique pour la fabrication des médicaments et leur emballage. Des lignes de remplissage sont par exemple disposées dans les enceintes. Des objets de l'extérieur peuvent alors être transférés vers l'intérieur de l'enceinte, par exemple des flacons ou des bouchons. Les objets sont contenus dans un sac muni d'une bride et d'une porte, la bride étant connectée de manière étanche à la bride de l'enceinte. Pour faciliter le transfert des objets, par exemple pour verser ceux-ci dans un bol vibrant de la ligne de remplissage, un système de transfert est mis en œuvre dans l'enceinte, comportant un élément formant un entonnoir, appelé chute et venant se positionner en appui ou dans la bride de l'enceinte à l'intérieur de l'enceinte pour recevoir les objets qui proviennent du sac et les guider vers leur destination, par exemple le bol vibrant. Le positionnement de la chute dans l'ouverture de la bride de conteneur permet de couvrir l'anneau de contamination.

Un exemple d'un tel système de transfert est décrit dans le document EP3581339. La chute est articulée par rapport à la paroi de l'enceinte entre une position accostée, dans laquelle elle accoste la bride de l'enceinte et borde l'ouverture de l'enceinte et une position écartée ou repos, dans laquelle la chute est écartée de l'ouverture de l'enceinte de sorte à ne pas gêner la remise en place de la porte de l'enceinte.

La chute est articulée sur un bras qui est lui-même articulé en rotation sur la paroi de l'enceinte. Lorsque l'on souhaite mettre en place la chute sur l'ouverture, le bras est mis en rotation en direction de la paroi, la chute et vient s'appliquer contre la bride de l'enceinte et border son ouverture. Pour écarter la chute, le bras est déplacé en rotation en sens inverse. Le système de transfert présente un encombrement relativement réduit. Cependant le mouvement de rotation de la chute dans l'enceinte peut provoquer, lors de l'accostage du dispositif de connexion, un frottement de l'extrémité d'accostage de la chute et de l'anneau de contamination, et peut détériorer l'étanchéité.

### RESUME D'EXEMPLES DE REALISATION

C'est par conséquent un but de la présente demande de décrire un système de transfert pour enceinte étanche limitant le frottement entre la chute et l'anneau de contamination.

Le but énoncé ci-dessus est atteint par un système de transfert destiné à être monté dans une enceinte étanche comportant un dispositif de connexion étanche à un volume clos, ledit dispositif de connexion comportant un axe longitudinal, le système de transfert comportant une chute montée articulée sur une partie de l'enceinte au moyen d'un dispositif d'articulation permettant à la chute d'avoir au moins à l'approche du dispositif de connexion un déplacement coaxial à l'axe longitudinal du dispositif de connexion. Ainsi les frottements entre la chute et l'anneau de contamination sont sensiblement réduits, par rapport à un système dans lequel la chute accoste le dispositif de connexion par un mouvement de rotation.

Dans un mode de réalisation, le dispositif d'articulation comporte deux bras reliés par une articulation pivot, l'un des bras est relié à la chute par une articulation pivot et l'autre bras est relié à l'enceinte par une articulation pivot, et chaque articulation pivot est motorisée. La commande des moteurs permet une grande liberté de mouvement à la chute par rapport à l'enceinte et la mise en œuvre de deux bras permet de déplacer la chute au moins lors de son accostage au dispositif de connexion et de son désaccostage du dispositif de connexion le long d'une direction coaxiale à l'axe du dispositif de connexion.

Dans un autre mode de réalisation, le dispositif d'articulation comporte deux bras et deux moteurs.

Les moteurs du dispositif d'articulation peuvent être commandés, par exemple lors d'une phase de désaccostage, de sorte que la chute ait dans cet ordre un premier mouvement exclusivement de translation selon une direction coaxiale à l'axe du dispositif de connexion et un deuxième mouvement sécant à l'axe du dispositif de connexion, par exemple orthogonal à celui-ci.

De manière préférée, le système de transfert, en particulier le dispositif d'articulation est fixé sur la bride du dispositif de connexion montée sur la paroi, ce qui facilite la connexion électrique des moteurs du dispositif d'articulation ainsi que l'intégration sur la paroi.

De manière avantageuse, la chute est solidarisée au dispositif d'articulation de manière amovible.

La présente demande a alors pour objet un système de transfert pour enceinte étanche, ladite enceinte étanche définissant un premier volume clos et comportant au moins un dispositif de connexion étanche d'axe destiné à connecter le premier volume clos à un deuxième volume clos, ledit système de transfert étant destiné à être disposé dans ladite enceinte, ledit système de transfert comportant :
- une chute, ladite chute comportant :
- une extrémité d'accostage d'axe longitudinal configurée pour coopérer avec le dispositif de connexion étanche; et
- une extrémité de déversement,
- un dispositif d'articulation de la chute destiné à déplacer la chute à l'intérieur du premier volume clos, ledit dispositif d'articulation comportant un premier bras et un deuxième bras, une première articulation pivot entre une première extrémité du premier bras et une première extrémité du deuxième bras, une deuxième articulation pivot sur une deuxième extrémité longitudinale du premier bras destinée à permettre un mouvement de rotation du premier bras par rapport à l'intérieur du premier volume clos,
- un premier moteur électrique pour déplacer en rotation le deuxième bras par rapport au premier bras,
- un deuxième moteur électrique pour déplacer en rotation le premier bras par rapport à l'enceinte,
- des moyens de commande au moins des premier et deuxième moteurs configurés pour que la trajectoire de la chute comporte, au moins en fin de phase d'approche du dispositif de connexion et en début de phase d'éloignement du dispositif de connexion, une partie de déplacement en translation de distance non nulle pendant laquelle l'axe de l'extrémité d'accostage et l'axe du dispositif de connexion sont colinéaires.

De plus, le système de transfert comporte une troisième articulation pivot entre le deuxième bras et la chute et un troisième moteur électrique pour déplacer en rotation la chute par rapport au deuxième bras, ledit troisième moteur étant commandé par les moyens de commande.

De manière avantageuse, le premier moteur est intégré dans la première articulation pivot et/ou le deuxième moteur est intégré dans la deuxième articulation pivot et/ou le troisième moteur est intégré dans la troisième articulation pivot.

Dans un exemple de réalisation, le premier bras et/ou le deuxième bras est ou sont coudé(s).

Selon une caractéristique additionnelle, la chute est montée de manière amovible sur le deuxième bras.

Un autre objet de la présente demande est une enceinte définissant un premier volume clos et comportant un système de transfert selon l'invention et un dispositif de connexion étanche à un deuxième volume clos, ledit dispositif de connexion étant monté dans une paroi de ladite enceinte, ledit dispositif de connexion comportant une bride et une porte.

Le dispositif d'articulation est fixé par exemple sur une bride du dispositif de connexion.

Dans un exemple de réalisation avantageux, la bride comporte un passage entre l'intérieur et l'extérieur de l'enceinte et par lequel passent les moyens de connexion électrique des moteurs. Le dispositif de connexion peut comporter des moyens automatisés d'ouverture d'un verrou de la porte et de pivotement de la porte activés par au moins un moteur et les moyens de connexion électrique dudit au moins un moteur peuvent passer par ledit passage.

Selon une caractéristique additionnelle, l'enceinte comporte un système de génération d'un flux laminaire situé d'un côté du dispositif de connexion et le dispositif d'articulation est fixé dans l'enceinte à l'opposé du système de génération d'un flux laminaire par rapport au dispositif de connexion.

Dans un autre exemple de réalisation, le dispositif d'articulation est fixé sur une paroi différente de celle dans laquelle est monté le dispositif de connexion.

De manière avantageuse, l'enceinte comporte des moyens de détection (S) de la configuration du système de transfert et/ou de l'état d'ouverture du dispositif de connexion.

Un autre objet de la présente demande est un procédé d'actionnement d'un système de transfert pour enceinte étanche, ladite enceinte étanche définissant un premier volume clos et comportant au moins un dispositif de connexion étanche d'axe destiné à connecter le premier volume clos à un deuxième volume clos, ledit système de transfert étant destiné à être disposé dans ladite enceinte, ledit système de transfert comportant :
- une chute, ladite chute comportant :
- une extrémité d'accostage d'axe longitudinal configurée pour coopérer avec le dispositif de connexion étanche; et
- une extrémité de déversement,
- un dispositif d'articulation de la chute destiné à déplacer la chute à l'intérieur du premier volume clos, ledit dispositif d'articulation comportant un premier bras et un deuxième bras, une première articulation pivot entre une première extrémité du premier bras et une première extrémité du deuxième bras, une deuxième articulation pivot sur une deuxième extrémité longitudinale du premier bras destinée à permettre un mouvement de rotation du premier bras par rapport à l'intérieur du premier volume clos, et une troisième articulation pivot entre le deuxième bras et la chute,
- un premier moteur électrique pour déplacer en rotation le deuxième bras par rapport au premier bras,
- un deuxième moteur électrique pour déplacer en rotation le premier bras par rapport à l'enceinte,
- un troisième moteur électrique pour déplacer en rotation la chute par rapport au deuxième bras, ledit procédé d'actionnement comportant une phase de rapprochement de la chute du dispositif de connexion pour mettre la chute dans une position d'accostage, et une phase d'éloignement de la chute du dispositif de connexion pour mettre la chute dans une position de repos, la chute étant déplacée en translation sur une distance non nulle de sorte que de l'extrémité d'accostage de la chute soit colinéaire à l'axe du dispositif de connexion en fin de la phase de rapprochement et en début de la phase d'éloignement.

Dans le cas où l'enceinte comporte un dispositif de génération d'un flux laminaire le long de la paroi comportant le dispositif de connexion étanche, à la fin de la phase d'éloignement, la chute peut être avantageusement disposée de sorte à être dans l'axe du flux laminaire.

### BRÈVE DESCRIPTION DES DESSINS

Les objets de la présente demande seront mieux compris sur la base de la description qui va suivre et des dessins en annexe sur lesquels:
Figure 1A est une vue en perspective de l'intérieur d'une enceinte muni d'un système de transfert selon un premier mode de réalisation, le système de transfert étant dans une position accostée,
Figure 1B est une vue de côté du système de transfert de la figure 1A.
Figure 2 est une vue de côté du système de la figure 1A dans un état de déploiement total du dispositif d'articulation.
Figure 3A
Figure 3B

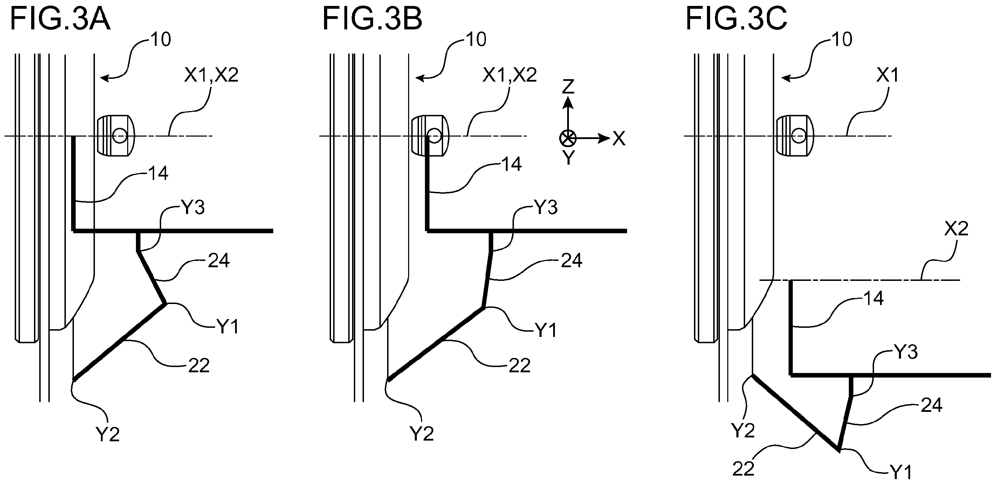

Figure 3C représentent schématiquement la trajectoire de la chute en phase d'éloignement du dispositif de connexion pouvant être obtenue grâce au dispositif selon l'invention.

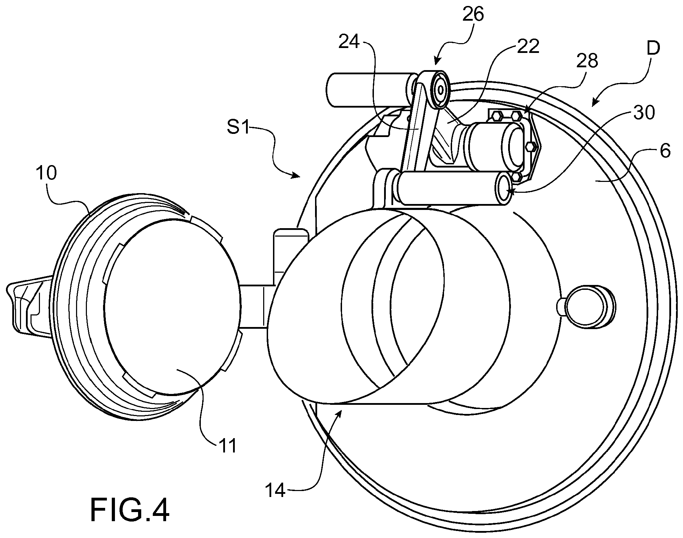

Figure 4 est une vue en perspective du dispositif de transfert fixé sur la partie supérieure du dispositif de connexion.

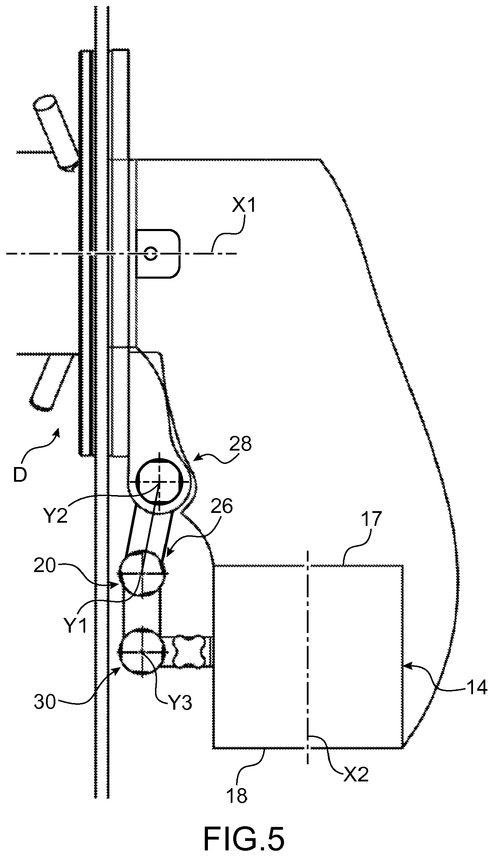

Figure 5 est une vue de côté du dispositif de connexion et du système de transfert dans une position repos.

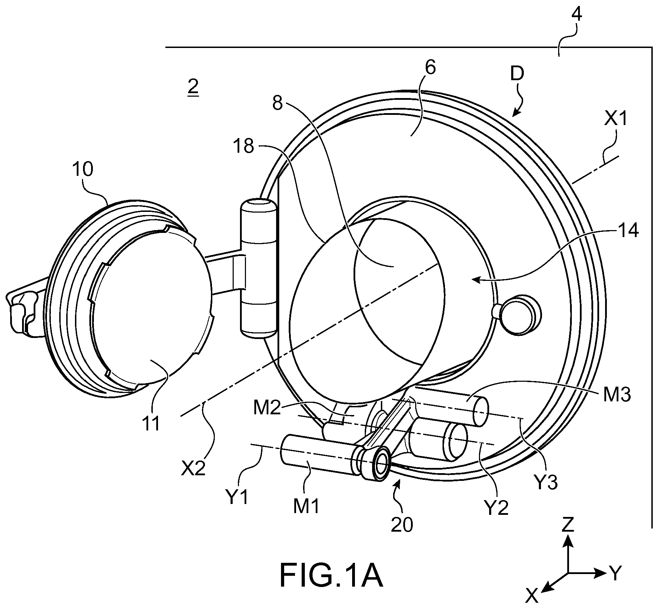

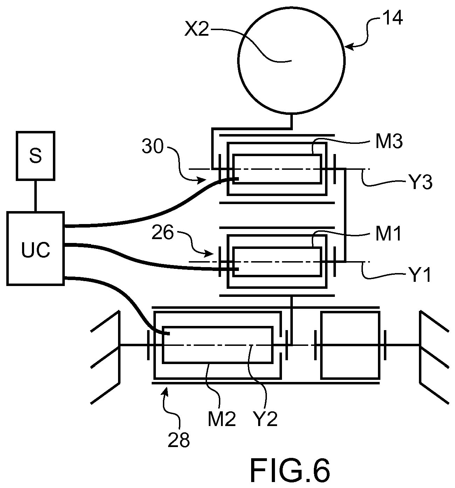

Figure 6 est un exemple de schéma cinématique du système de transfert de la figure 1A.

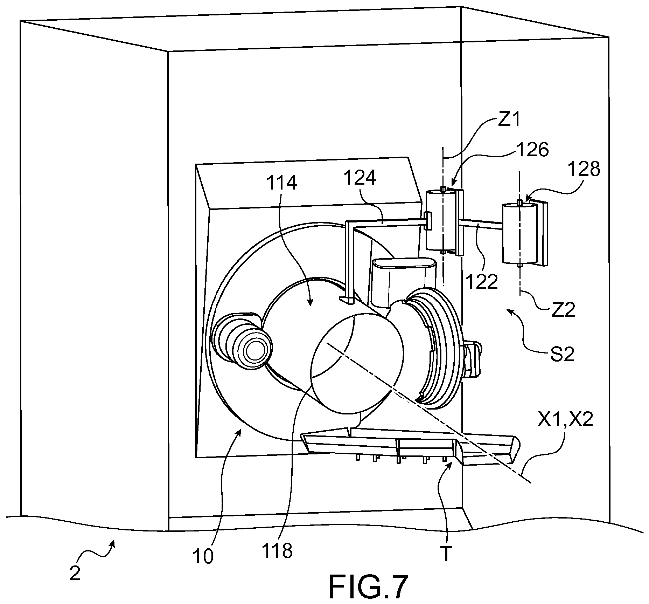

Figure 7 est une vue en perspective de l'intérieur d'une enceinte muni d'un système de transfert selon un deuxième mode de réalisation.

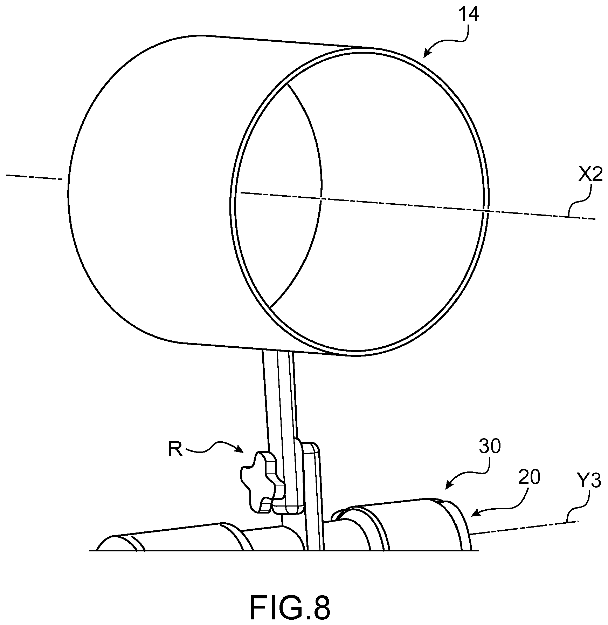

Figure 8 est une vue en perspective d'un exemple de connexion rapide d'une chute sur le dispositif d'articulation.

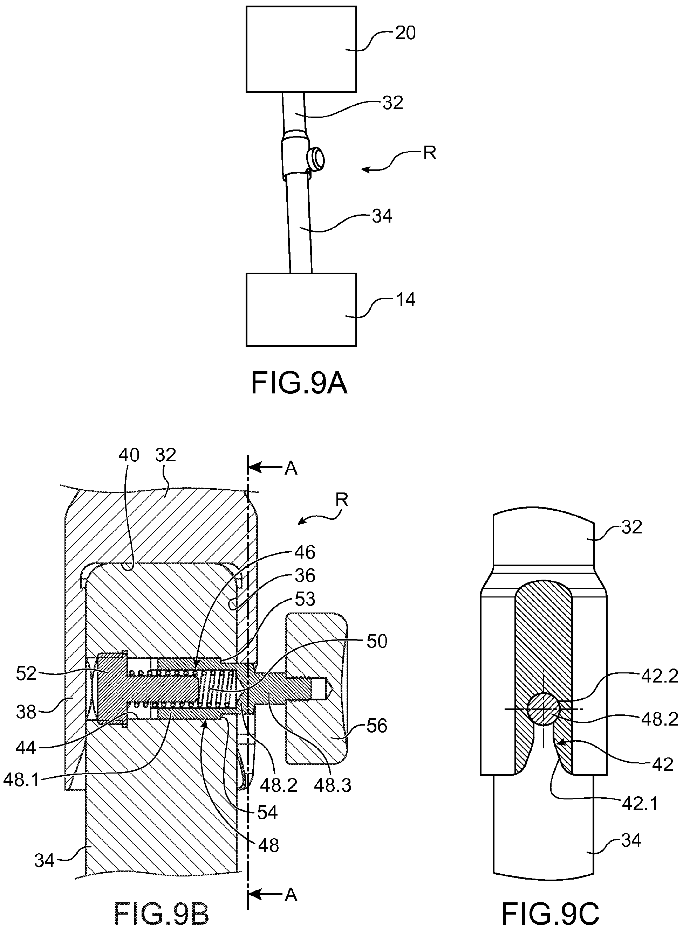

Figure 9A est une vue en perspective d'un exemple de système montage/démontage rapide à une seule main pouvant être mis en œuvre entre la chute et le dispositif d'articulation.
Figure 9B est une vue en coupe longitudinale du système de la figure 9A.
Figure 9C est une vue en coupe du système de la figure 9A le long de plan A-A.

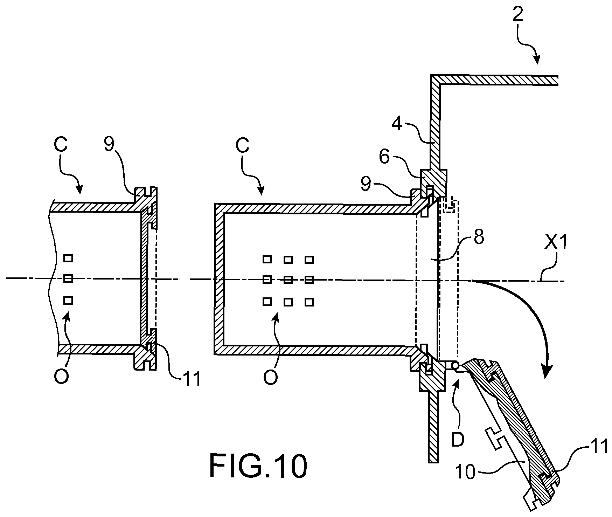

Figure 10 est une représentation schématique d'une vue de dessus en coupe d'une enceinte munie d'un dispositif de connexion étanche auquel est connecté un conteneur.

### EXPOSÉ DÉTAILLÉ DE MODES DE RÉALISATION PARTICULIERS

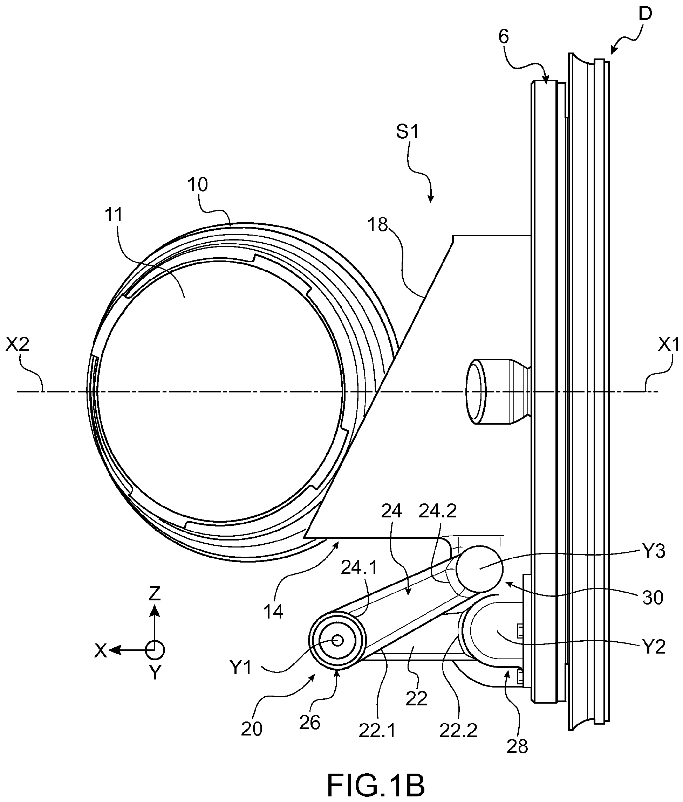

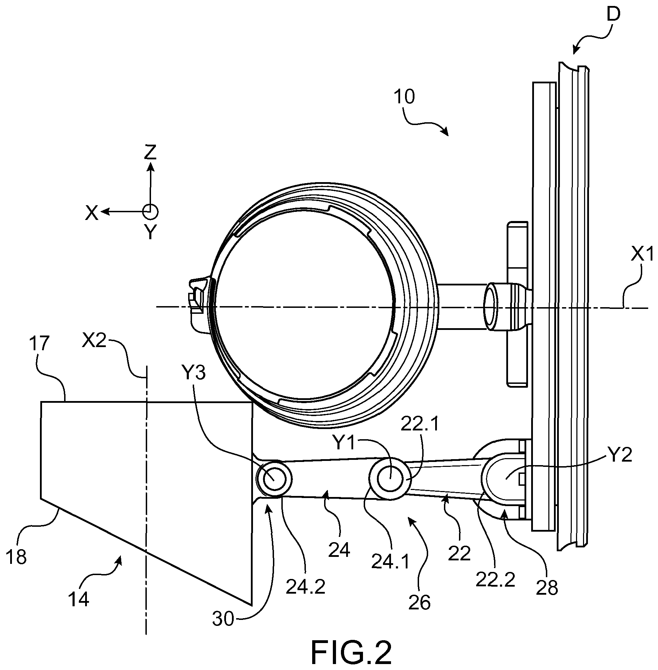

Sur les figures 1A, 1B et 2, on peut voir un exemple d'enceinte étanche, représentée en transparence, munie d'un exemple d'un système de transfert étanche S1 selon un premier mode de réalisation, le système de transfert étant représenté dans différentes positions.

L'enceinte 2 comporte des parois délimitant un volume étanche. Au moins l'une des parois 4 comporte un dispositif de connexion étanche D à un système étanche extérieur, par exemple une autre enceinte, un conteneur rigide ou souple, type sac. Le dispositif D est destiné à permettre de connecter de manière étanche les volumes intérieurs de l'enceinte et du système extérieur et permettre un transfert étanche entre les deux volumes, pour protéger les objets contenus dans les volumes étanches et/ou protéger l'environnement extérieur de ces objets. Par exemple, l'enceinte 2 peut faire partie d'un système d'isolateur, en particulier une zone de confinement de l'isolateur, une zone de confinement stérile ou une zone de confinement radioactive, qui peut être utilisée pour fabriquer des produits dans l'industrie pharmaceutique, agroalimentaire ou nucléaire par exemple.

Des exemples de dispositif de connexion étanche sont décrits dans le document FR 2 695 343 et dans le document US 9 754 691.

Le dispositif de connexion étanche D comporte une bride 6 montée dans la paroi 4 et délimitant une ouverture 8, une porte 10 destinée à fermer de manière étanche l'ouverture 8. Le dispositif de connexion étanche D comporte également des moyens de connexion à un système extérieur, par exemple un conteneur C (figure 10), comportant également une bride 9 bordant une ouverture et une porte 11 fermant de manière étanche ladite ouverture. Les moyens de connexion de la bride 6 et de la bride 9 sont par exemple de type à baïonnette. Chaque porte est connectée à sa bride également par une connexion à baïonnette. Le dispositif de connexion présente une symétrie de révolution d'axe X1.

Un exemple de mode opératoire pour connecter de manière étanche un conteneur à l'enceinte va être brièvement décrit à l'aide de la figure 10. En pointillés est représenté le conteneur fermé avant sa connexion à l'enceinte. Le conteneur contient des objets O représentés schématiquement, que l'on souhaite transférer dans l'enceinte. Le système de transfert n'est pas représenté.

La bride 9 du conteneur est solidarisée de manière étanche à la bride 6 de l'enceinte au moyen d'une connexion à baïonnette. Simultanément la porte 11 du conteneur et la porte 10 de l'enceinte sont solidarisées l'une à l'autre de manière étanche par une connexion à baïonnette. Les faces extérieures des portes 10, 11 sont isolées par rapport au volume intérieur du conteneur et de l'enceinte, l'ensemble formé par les deux portes 10, 11 solidarisées l'une à l'autre peut être retiré en le faisant pivoter autour de son axe, et ensuite déplacer dans l'enceinte, libérant un passage entre les deux volumes. Les deux volumes sont alors en communication de manière étanche et le transfert d'objets entre les deux volumes peut être réalisé par le passage.

La bride 9 du conteneur porte un joint qui vient en contact avec la face extérieure de la bride 6 de l'enceinte, ce joint participe à la délimitation du passage entre les deux volumes. La pointe du joint de la bride de conteneur qui n'est pas en contact avec la bride 6 est une ligne appelée « ligne critique » ou « anneau de contamination » ou « ring of concern ».

L'enceinte comporte un système de transfert S1 permettant de guider des objets venant de l'extérieur vers une zone du volume intérieur de l'enceinte. Par exemple ces objets sont des bouchons contenus dans un sac et qui sont déversés à l'intérieur de l'enceinte. Le système S1 est destiné à faciliter le traitement et/ou le transfert d'objets/d'éléments dans l'enceinte 2, par exemple à faciliter la fourniture d'objets/d'éléments à un tapis d'acheminement ou, lors d'un traitement ultérieur, de transfert dans un conteneur étanche séparé, à travers un autre dispositif de connexion étanche.

Le système de transfert S1 comporte une pièce 14 assurant le guidage de l'écoulement des objets, désignée chute et formant une sorte d'entonnoir.

Dans l'exemple représenté, la chute 14 est cylindrique d'axe longitudinal X2 à section circulaire comprenant une extrémité d'accostage 17 (figure 2) destinée à venir se loger dans le passage entre les deux enceintes et à border l'ouverture lorsque les portes sont ouvertes, et une autre extrémité 18, formant une extrémité de déversement, orientée vers la zone où l'on souhaite orienter le ou les objets dans l'enceinte. Dans l'exemple représenté, l'extrémité de déversement est coupée par un plan incliné par rapport à son axe de révolution X2 lui conférant une forme biseautée. La chute est destinée à prendre une position accostée dans laquelle l'extrémité d'accostage 17 est logée dans le passage formé dans les deux brides (figures 1A et 1B), et une position écartée, dite de repos, dans laquelle la chute 14 est écartée de l'ouverture et est en attente d'un nouveau transfert (figure 2).

En variante, la chute a par exemple une forme coudée, dans ce cas l'axe X2 est l'axe de l'extrémité d'accostage 17.

De manière avantageuse, l'extrémité d'accostage 17 est recouverte d'un bourrelet en matériau souple (non représenté), par exemple en élastomère.

Le système de transfert comporte un dispositif d'articulation 20 de la chute par rapport au dispositif de connexion, le dispositif d'articulation 20 étant monté sur l'enceinte.

Le dispositif d'articulation 20 comporte un premier bras 22 et un deuxième bras 24 reliés l'un à l'autre au niveau de l'une de leurs extrémités longitudinales 22.1 et 24.1 par une première articulation pivot 26 d'axe Y1 (figures 2 et 6). Le premier bras 22 est fixé à l'enceinte par son autre extrémité longitudinale 22.2 par une deuxième articulation pivot 28 d'axe Y2. La chute 14 est montée sur l'autre extrémité longitudinale 24.2 du deuxième bras par une troisième articulation pivot 30 d'axe Y3. Les axes Y1, Y2 et Y3 sont parallèles entre eux et orthogonaux à l'axe X1.

Le système de transfert comporte également des moyens d'actionnement pour mettre en mouvement la chute 14 par rapport au dispositif de connexion D. De manière très avantageuse, le dispositif d'articulation est motorisé, et de manière encore plus avantageuse, il comporte un moteur électrique M1, M2, M3 au niveau des première 26, deuxième 28 et troisième 30 articulations pivots.

Une unité de commande UC (représentée schématiquement sur la figure 6) génère des ordres individuels à chaque moteur électrique M1, M2, M3. La commande individuelle des moteurs offre une grande liberté dans la configuration des trajectoires de déplacement de la chute par rapport au dispositif de connexion. Cette grande liberté permet de s'adapter à une multitude d'environnements à l'intérieur de l'enceinte et ainsi d'éviter les obstacles. Chaque moteur M1, M2, M3 comporte un codeur ce qui permet de contrôler de manière précise chacun des axes de rotation et donc la position relative des bras 22, 24 et de la chute 14 et leur position par rapport au dispositif de connexion. Des moyens de détection S de la configuration du système de transfert et/ou de l'état d'ouverture du dispositif de connexion sont avantageusement prévus. La configuration des trajectoires est obtenue par programmation des logiciels de commande des moteurs en agissant sur des paramètres asservis tels que l'angle de rotation et la vitesse de rotation de chacun des moteurs. Des capteurs peuvent être mis en œuvre pour connaître la position des bras et de la chute par rapport au dispositif de connexion et aux parois de l'enceinte.

Dans le cas d'un dispositif de connexion automatisé, dans lequel l'ouverture de la porte est motorisée, l'unité de commande peut être commune à la fois à la commande du système de transfert et du dispositif de connexion, et elle peut prévoir d'empêcher la fermeture des portes lorsque la chute est en place dans le passage et/ou il peut être prévu d'empêcher l'actionnement du système de transfert tant que les portes sont fermées.

De manière particulièrement avantageuse, chaque moteur M1, M2, M3 est intégré dans l'articulation pivot 26, 28, 30 qu'il actionne, comme cela est représenté sur le schéma cinématique de la figure 6. Chaque moteur comporte un arbre qui forme directement l'axe de l'articulation pivot, aucun réducteur, ni système de transmission à engrenages et/ou à courroie n'est mis en œuvre. Un tel agencement des moteurs permet de réaliser un système de transfert compact et réduit la masse embarquée. Il s'agit par exemple de motoréducteurs à courant continu 24V équipés de frein et de codeur.

Du fait des axes des moteurs parallèles entre eux, le dispositif d'articulation se déplace dans un plan normal aux axes Y1, Y2 et Y3.

Une trajectoire préférée de déplacement de la chute va maintenant être décrite en relation avec les figures 3A à 3C. Cette trajectoire comporte la phase d'accostage de la chute sur le dispositif de connexion et la phase de désaccostage ou d'éloignement de la chute du dispositif de connexion. La trajectoire de chacune des phases comporte au moins deux parties qui sont généralement les mêmes mais dont l'ordre de déroulement est inversé.

Considérons une phase de désaccostage : lorsque la chute est accostée sur le dispositif de connexion, son axe X2 est sensiblement colinéaire à l'axe X1 (figure 3A)

Dans la présente demande, on entend par « sensiblement colinéaire » deux axes parallèles séparés d'une distance d'au plus 5 mm, de préférence d'au plus 1 mm ou sécants d'un angle d'au plus 5°, de préférence d'au plus 1°.

Dans une première partie de la trajectoire représentée sur la figure 3B, la chute 14 a un déplacement en translation en éloignement du dispositif de connexion de sorte que son axe reste sensiblement colinéaire à l'axe X1 limitant les frottements avec l'anneau de contamination et les brides 6, 9. Le déplacement sur cette première partie est suffisant pour que l'extrémité d'accostage 17 de la chute soit à l'extérieur du dispositif de connexion, il est par exemple de l'ordre de quelques cm, par exemple environ 5 cm. Dans cette partie, deux ou trois moteurs sont commandés en même temps pour maintenir l'axe X2 colinéaire à l'axe X1 et assurer le déploiement du dispositif d'articulation. Dans l'exemple de trajectoire de la figure 3B, les trois moteurs M1, M2 et M3 sont activés.

Dans une deuxième partie de la trajectoire représentée sur la figure 3C, les moteurs sont commandés pour que la chute 14 se déplace en translation le long d'un axe Z orthogonal à l'axe X1 et aux axes Y1, Y2, Y3. Dans cette deuxième partie, deux ou trois moteurs sont commandés en même temps pour maintenir l'axe X2 dans la direction X. Dans l'exemple de trajectoire de la figure 3C, les trois moteurs M1, M2 et M3 sont activés.

L'axe X2 de la chute reste parallèle à l'axe X1 pendant tout son déplacement. La chute vient se placer sous le dispositif de connexion contre la paroi de l'enceinte, réduisant son encombrement dans l'enceinte.

La trajectoire d'accostage comporte la deuxième partie, puis la première partie.

De manière avantageuse, la trajectoire de désaccostage peut comporter une troisième partie dans laquelle les moteurs sont actionnés pour positionner les bras et la chute le long de la paroi, la chute ayant son axe X2 parallèle à la paroi. Il s'agit avantageusement de la position repos de la chute limitant davantage son encombrement et son impact sur le flux laminaire de l'enceinte. Cette position est représentée sur la figure 5.

Il sera compris que cet exemple de trajectoire n'est pas limitatif. En particulier lors de la deuxième partie, la chute peut se déplacer selon un mouvement en partie rectiligne et en partie non rectiligne ou uniquement non rectiligne. Par exemple, on peut prévoir qu'après le déplacement en translation pour s'éloigner du dispositif de connexion, les moteurs soient commandés pour placer l'axe de la chute dans la direction Z, comme cela est représenté sur la figure 2. L'encombrement dans l'enceinte du système de transfert selon la figure 2 est important. De préférence, le déplacement pendant la deuxième partie est choisi pour limiter l'encombrement du système de transfert dans l'enceinte.

Dans l'exemple représenté et de manière préférée, le dispositif d'articulation est fixé sur le dispositif de connexion, plus particulièrement sur la bride 6, ce qui évite de devoir percer la paroi de l'enceinte pour fixer le système de transfert.

En outre lorsqu'au moins une partie du dispositif de connexion est automatisée, par exemple la commande du verrou de la porte du dispositif de connexion et l'ouverture de la porte du dispositif de connexion, par mise en œuvre d'un ou plusieurs moteurs électriques, les câbles électriques des moteurs du dispositif de transfert et des moteurs du dispositif de connexion sont rassemblés et cheminent par le perçage fait dans la bride.

Cet assemblage permet d'offrir un haut niveau d'intégration et de simplifier l'opération d'équipement d'une enceinte.

De manière préférée, le système de transfert est fixé sur la partie inférieure de la bride sous l'ouverture 8, donc sous le passage, ce qui est favorable en cas d'application d'un flux laminaire dans l'enceinte. En effet celui-ci est généralement généré en haut de l'enceinte. Dans le cas d'un dispositif de connexion monté sur la paroi verticale, le système de transfert placé sous l'ouverture du dispositif de connexion, i.e. en aval de l'ouverture en considérant le sens du flux laminaire, ne gêne pas l'écoulement du flux devant l'ouverture.

Néanmoins d'autres implantations sont envisageables.

En effet, il est particulièrement intéressant que la chute soit dans l'axe du flux laminaire en position repos. De manière avantageuse, en position repos la chute est orientée verticalement ainsi elle se trouve orientée comme le flux laminaire.

Sur la figure 4, le système de transfert S1 est positionné au-dessus de l'ouverture du dispositif de connexion, le premier bras 22 étant fixé sur la bride 6.

Le système de transfert peut également être fixé à une paroi de l'enceinte, par exemple sur la paroi portant le dispositif de connexion, de préférence au-dessus ou au-dessous de celui-ci, ce qui peut répondre à des contraintes d'implantation et d'encombrement dans l'enceinte.

Sur la figure 7, on peut voir un exemple d'un deuxième mode de réalisation d'un système de transfert S2.

Dans cet exemple, le système de transfert S2 est fixé sur une paroi différente de celle portant le dispositif de connexion, qui est dans cet exemple une paroi latérale, qui se trouve du côté de la charnière de la porte du dispositif de connexion. Le système de transfert comporte un deuxième bras 124 présentant un coude.

Dans ce mode de réalisation, le dispositif d'articulation comporte deux bras 122, 124, deux articulations pivots 126, 128 d'axe Z1, Z2 respectivement et deux moteurs intégrés dans les articulations pivots 126, 128 respectivement, le bras 124 est fixé rigidement à la chute 114. La mise en œuvre d'un bras coudé 124 permet de disposer le système à des emplacements qui normalement sont exclus du fait de la proximité de la porte ou du verrou. Dans cet exemple, le bras coudé forme un angle droit, tout autre angle est envisageable et est choisi en fonction de l'implantation.

Ce deuxième mode de réalisation permet, en position repos de la chute, de libérer la zone de passage des composants et la zone de passage du flux laminaire. Il offre un volume libre dans l'enceinte pour manipuler les composants, par exemple par des robots.

Dans cet exemple, l'enceinte 2 comporte un système de convoyage tel qu'une rampe de convoyage ou tapis roulant T sur lequel vont se déverser les objets transférés du conteneur par la chute. L'extrémité 118 de la chute 114 est à l'aplomb du tapis roulant T lorsque la chute est en position accostée.

Les moteurs sont actionnés pour que la chute ait un déplacement selon une trajectoire comportant au moins un déplacement en translation en éloignement et à l'approche du dispositif de connexion. Les axes des articulations sont dans cette configuration orientés verticalement.

En variante, le système de transfert est fixé sur la paroi portant le dispositif de connexion mais est déporté latéralement par rapport au centre du dispositif de connexion. Dans cette configuration, le système est fixé de sorte que les axes des articulations pivots soient à l'horizontal.

Un système de transfert selon le deuxième mode de réalisation peut comporter deux bras droits similaires à ceux du système S1.

La chute est avantageusement montée de manière amovible sur le dispositif d'articulation, ce qui permet de manière aisée son retrait, son nettoyage, et sa stérilisation par exemple en autoclave. Un nettoyage facilité est particulièrement intéressant puisque la chute lors des transferts est en contact avec les composants, et requiert un nettoyage soigneux.

De préférence, la fixation de la chute 14 sur le dispositif d'articulation 20 s'opère par un système de montage/démontage rapide R à une seule main (figure 8).

Sur les figures 9A à 9C, on peut voir un exemple d'un système de montage/démontage rapide R.

Le système R est disposé en une tige 32 fixée au dispositif d'articulation 20 et une tige 34 fixée sur la chute 14. Par exemple la tige 32 comporte à son extrémité libre un logement 36 dimensionné pour loger l'extrémité libre de la tige 34. Le logement 36 comporte une paroi latérale 38 et un fond 40. La paroi latérale 38 comporte une encoche 42 (figure 9C) s'étendant longitudinalement sur l'épaisseur du logement 36. L'encoche 42 comporte une partie d'insertion 42.1 évasée débouchant dans l'extrémité libre de la tige 32 et une partie d'immobilisation 42.2 de forme circulaire.

La tige fixée 34 à la chute comporte un alésage transversal 44 traversant et logeant un mécanisme de verrouillage axial 46 coopérant avec l'encoche 42.

Le mécanisme de verrouillage 46 comporte une tige de verrouillage 48 mobile transversalement dans l'alésage 44 et poussée vers l'extérieur au moyen d'un ressort 50 monté en compression entre la tige 48 et une butée transversale 52. Dans cet exemple la butée est formée par un boulon vissé dans l'alésage.

La tige de verrouillage 48 comporte trois portions axiales 48.1, 48.2 et 48.3 de diamètre décroissant dans le sens de la force de poussée exercée par le ressort.

L'alésage transversal 44 comporte un épaulement 53 coopérant avec un épaulement 54 raccordant les faces latérales extérieures des portions axiales 48.1 et 48.2. Le diamètre de la portion axiale 48.2 est sensiblement égal à celui de la partie d'immobilisation 42.2.

L'extrémité de la tige de verrouillage 48 porte un bouton d'actionnement 56.

Le fonctionnement du système est le suivant :
L'opérateur appuie sur le bouton d'actionnement 56, déplaçant la tige de verrouillage 48 et comprimant le ressort 50, la portion 48.3 vient alors se loger dans la partie d'immobilisation 42.2 de l'encoche. Son diamètre étant inférieur à la plus petite dimension transversale de l'encoche 42, la portion 48.3 peut coulisser dans l'encoche 42, ce qui permet de retirer l'extrémité de la tige 34 du logement 36, et de séparer la chute du dispositif d'articulation.

La remise en place de la chute sur le dispositif d'articulation s'effectue en appuyant sur le bouton d'actionnement et en insérant la portion 48.3 dans l'encoche 42.

Cette manipulation peut se faire d'une seule main.

Le système de transfert selon la présente description s'applique à des enceintes comportant tout type de dispositif de connexion étanche et pas seulement ceux mettant en œuvre de moyens de connexion à baïonnette. Le ou les dispositifs de connexion étanche peuvent mettre en œuvre des pions rétractables, des cliquets, être du type magnétique...

Les objets décrits dans cette demande peuvent être mis en œuvre dans tous les domaines techniques requérant un transfert d'objets entre deux volumes clos et isolé de l'environnement extérieur.

### Références

2 enceinte
4 paroi
6, 9 brides
8 ouverture
10, 11 portes
S1 Système de transfert
14 chute
17 extrémité d'accostage
18 extrémité de déversement
20 dispositif d'articulation
22 premier bras
24 deuxième bras
22.1, 24.1, 22.2, 24.2 extrémités longitudinales
26 première articulation pivot
28 deuxième articulation pivot
30 troisième articulation pivot
32, 34 tige
36 logement
38 paroi latérale
40 fond
42 encoche
42.1 partie d'insertion
42.2 parie d'immobilisation
44 alésage transversal
46 mécanisme de verrouillage axial
48 tige de verrouillage
48.1, 48.2, 48.3 portions axiales
50 ressort
52 butée transversale
53 épaulement
54 épaulement
56 bouton d'actionnement
114 chute
118 extrémité de déversement
122 premier bras
124 (deuxième) bras coudé
126, 128 articulations pivots
S1, S2 systèmes de transfert
D dispositif de connexion étanche
C conteneur
X1, Y1, Y2, Y3, Z, Z1, Z2 axes
O objets
M1, M2, M3 moteurs
UC unité de commande
T tapis roulant
R système montage/démontage rapide
S moyens de détection

## Revendications

1. Système de transfert pour enceinte étanche, ladite enceinte étanche définissant un premier volume clos et comportant au moins un dispositif de connexion étanche d'axe de révolution (X1) destiné à connecter le premier volume clos à un deuxième volume clos, ledit système de transfert étant destiné à être disposé dans ladite enceinte, ledit système de transfert comportant :
- une chute (14), ladite chute (14) comportant:
- une extrémité d'accostage (17) d'axe longitudinal (X2) configurée pour coopérer avec le dispositif de connexion étanche; et
- une extrémité de déversement (18),
- un dispositif d'articulation de la chute destiné à déplacer la chute à l'intérieur du premier volume clos, ledit dispositif d'articulation comportant un premier bras (22) et un deuxième bras (24), une première articulation pivot (26) entre une première extrémité du premier bras et une première extrémité du deuxième bras (24), une deuxième articulation pivot (28) sur une deuxième extrémité longitudinale du premier bras (22) destinée à permettre un mouvement de rotation du premier bras (22) par rapport à l'intérieur du premier volume clos et une troisième articulation pivot (30) entre le deuxième bras (24) et la chute (14),
- un premier moteur électrique (M1) pour déplacer en rotation le deuxième bras (24) par rapport au premier bras (22),
- un deuxième moteur électrique (M2) pour déplacer en rotation le premier bras (22) par rapport à l'enceinte,
- un troisième moteur électrique (M3) pour déplacer en rotation la chute (14) par rapport au deuxième bras (24),
- des moyens de commande (UC) au moins des premier (M1) deuxième (M2) et troisième (M3) moteurs configurés pour que la trajectoire de la chute (14) comporte, au moins en fin de phase d'approche du dispositif de connexion (D) et en début de phase d'éloignement du dispositif de connexion (D), une partie de déplacement en translation de distance non nulle pendant laquelle l'axe (X2) de l'extrémité d'accostage et l'axe (X1) du dispositif de connexion sont colinéaires.

2. Système de transfert selon la revendication 1, dans lequel le premier moteur (M1) est intégré dans la première articulation pivot (26) et/ou le deuxième moteur (M2) est intégré dans la deuxième articulation pivot (28) et/ou le troisième moteur (M3) est intégré dans la troisième articulation pivot (30).

3. Système de transfert selon l'une des revendications 1 ou 2, dans lequel le premier bras et/ou le deuxième bras est ou sont coudé(s).

4. Système de transfert selon l'une des revendications 1 à 3, dans lequel la chute (14) est montée de manière amovible sur le deuxième bras (24).

5. Enceinte définissant un premier volume clos et comportant un système de transfert selon l'une des revendications précédentes et un dispositif de connexion étanche (D) à un deuxième volume clos, ledit dispositif de connexion (D) étant monté dans une paroi (4) de ladite enceinte, ledit dispositif de connexion comportant une bride et une porte.

6. Enceinte selon la revendication 5, dans laquelle le dispositif d'articulation est fixé sur une bride du dispositif de connexion.

7. Enceinte selon la revendication 6, dans laquelle la bride comporte un passage entre l'intérieur et l'extérieur de l'enceinte et par lequel passent des moyens de connexion électrique des moteurs.

8. Enceinte selon la revendication 7, dans laquelle le dispositif de connexion comporte des moyens automatisés d'ouverture d'un verrou de la porte et de pivotement de la porte activés par au moins un moteur et des moyens de connexion électrique dudit au moins un moteur passent par ledit passage.

9. Enceinte selon l'une des revendications 5 à 8, comportant un système de génération d'un flux laminaire situé d'un côté du dispositif de connexion et dans laquelle le dispositif d'articulation est fixé dans l'enceinte à l'opposé du système de génération d'un flux laminaire par rapport au dispositif de connexion.

10. Enceinte selon la revendication 5, dans laquelle le dispositif d'articulation est fixé sur une paroi différente de celle dans laquelle est monté le dispositif de connexion.

11. Enceinte selon l'une des revendications 5 à 10, comportant des moyens de détection (S) de la configuration du système de transfert et/ou de l'état d'ouverture du dispositif de connexion.

12. Procédé d'actionnement d'un système de transfert pour enceinte étanche, ladite enceinte étanche définissant un premier volume clos et comportant au moins un dispositif de connexion étanche d'axe (X1) destiné à connecter le premier volume clos à un deuxième volume clos, ledit système de transfert étant destiné à être disposé dans ladite enceinte, ledit système de transfert comportant :
- une chute (14), ladite chute (14) comportant:
- une extrémité d'accostage (17) d'axe longitudinal (X2) configurée pour coopérer avec le dispositif de connexion étanche; et
- une extrémité de déversement (18),
- un dispositif d'articulation de la chute destiné à déplacer la chute à l'intérieur du premier volume clos, ledit dispositif d'articulation comportant un premier bras et un deuxième bras, une première articulation pivot entre une première extrémité du premier bras et une première extrémité du deuxième bras, une deuxième articulation pivot sur une deuxième extrémité longitudinale du premier bras destinée à permettre un mouvement de rotation du premier bras par rapport à l'intérieur du premier volume clos et une troisième articulation pivot (30) entre le deuxième bras (24) et la chute (14),
- un premier moteur électrique pour déplacer en rotation le deuxième bras par rapport au premier bras,
- un deuxième moteur électrique pour déplacer en rotation le premier bras par rapport à l'enceinte,
- un troisième moteur électrique (M3) pour déplacer en rotation la chute (14) par rapport au deuxième bras (24),ledit procédé d'actionnement comportant une phase de rapprochement de la chute (14) du dispositif de connexion pour mettre la chute (14) dans une position d'accostage, et une phase d'éloignement de la chute (14) du dispositif de connexion (D) pour mettre la chute (14) dans une position de repos, la chute étant déplacée en translation sur une distance non nulle de sorte que l'axe (X2) de l'extrémité d'accostage de la chute soit colinéaire à l'axe (X1) du dispositif de connexion en fin de la phase de rapprochement et en début de la phase d'éloignement.

13. Procédé d'actionnement selon la revendication 12, l'enceinte comportant un dispositif de génération d'un flux laminaire le long de la paroi comportant le dispositif de connexion étanche, procédé dans lequel à la fin de la phase d'éloignement la chute (14) est disposée de sorte à être dans l'axe du flux laminaire.

## Patentansprüche

1. Transfersystem für ein dichtes Gehäuse, wobei das dichte Gehäuse ein erstes geschlossenes Volumen definiert und mindestens eine dichte Verbindungsvorrichtung für die Drehachse (X1) aufweist, die dazu bestimmt ist, das erste geschlossene Volumen mit einem zweiten geschlossenen Volumen zu verbinden, wobei das Transfersystem dazu bestimmt ist, in dem Gehäuse angeordnet zu sein, wobei das Transfersystem Folgendes aufweist:
- ein Fallrohr (14), wobei das Fallrohr (14) Folgendes aufweist:
- ein Andockende (17) mit Längsachse (X2), das so konfiguriert ist, dass es mit der dichten Verbindungsvorrichtung zusammenarbeitet; und
- ein Ausgießende (18),
- eine Gelenkvorrichtung für das Fallrohr, die dazu bestimmt ist, das Fallrohr innerhalb des ersten geschlossenen Volumens zu bewegen, wobei die Gelenkvorrichtung einen ersten Arm (22) und einen zweiten Arm (24), ein erstes Drehgelenk (26) zwischen einem ersten Ende des ersten Arms und einem ersten Ende des zweiten Arms (24), ein zweites Drehgelenk (28) an einem zweiten Längsende des ersten Arms (22), das dazu bestimmt ist, eine Drehbewegung des ersten Arms (22) in Bezug zu dem Inneren des ersten geschlossenen Volumens zu ermöglichen, und ein drittes Drehgelenk (30) zwischen dem zweiten Arm (24) und dem Fallrohr (14) aufweist,
- einen ersten Elektromotor (M1) zum Drehen des zweiten Arms (24) in Bezug auf den ersten Arm (22),
- einen zweiten Elektromotor (M2) zum Drehen des ersten Arms (22) in Bezug auf das Gehäuse,
- einen dritten Elektromotor (M3) zum Drehen des Fallrohrs (14) in Bezug auf den zweiten Arm (24),
- Steuermittel (UC) mindestens des ersten (M1), des zweiten (M2) und des dritten (M3) Motors, die so konfiguriert sind, dass das Fallrohr (14) mindestens an dem Ende der Annäherungsphase der Verbindungsvorrichtung (D) und an dem Anfang der Entfernungsphase der Verbindungsvorrichtung (D) einen translatorischen Verschiebungsabschnitt mit einem Abstand ungleich Null aufweist, während dessen die Achse (X2) des Andockendes und die Achse (X1) der Verbindungsvorrichtung kolinear sind.

2. Transfersystem nach Anspruch 1, wobei der erste Motor (M1) in das erste Drehgelenk (26) integriert ist und/oder der zweite Motor (M2) in das zweite Drehgelenk (28) integriert ist und/oder der dritte Motor (M3) in das dritte Drehgelenk (30) integriert ist.

3. Transfersystem nach einem der Ansprüche 1 oder 2, wobei der erste Arm und/oder der zweite Arm gebogen ist/sind.

4. Transfersystem nach einem der Ansprüche 1 bis 3, wobei das Fallrohr (14) lösbar an dem zweiten Arm (24) montiert ist.

5. Gehäuse, das ein erstes geschlossenes Volumen definiert und ein Transfersystem nach einem der vorhergehenden Ansprüche und eine Vorrichtung (D) zur dichten Verbindung mit einem zweiten geschlossenen Volumen aufweist, wobei die Verbindungsvorrichtung (D) in einer Wand (4) des Gehäuses montiert ist, wobei die Verbindungsvorrichtung einen Flansch und eine Tür aufweist.

6. Gehäuse nach Anspruch 5, wobei die Gelenkvorrichtung an einem Flansch der Verbindungsvorrichtung befestigt ist.

7. Gehäuse nach Anspruch 6, wobei der Flansch einen Durchgang zwischen dem Inneren und dem Äußeren des Gehäuses aufweist und durch den elektrische Verbindungsmittel der Motoren verlaufen.

8. Gehäuse nach Anspruch 7, wobei die Verbindungsvorrichtung automatisierte Mittel zum Öffnen einer Türverriegelung und zum Schwenken der Tür aufweist, die von mindestens einem Motor aktiviert werden, und elektrische Verbindungsmittel des mindestens einen Motors durch den Durchgang führen.

9. Gehäuse nach einem der Ansprüche 5 bis 8, das ein System zur Erzeugung eines Laminarstroms aufweist, das sich auf einer Seite der Verbindungsvorrichtung befindet, und wobei die Gelenkvorrichtung gegenüber dem System zur Erzeugung eines Laminarstroms in Bezug auf die Verbindungsvorrichtung in dem Gehäuse befestigt ist.

10. Gehäuse nach Anspruch 5, wobei die Gelenkvorrichtung an einer anderen Wand befestigt ist als die, in der die Verbindungsvorrichtung montiert ist.

11. Gehäuse nach einem der Ansprüche 5 bis 10, das Erfassungsmittel (S) der Konfiguration des Transfersystems und/oder des Öffnungszustands der Verbindungsvorrichtung aufweist.

12. Betätigungsverfahren eines Transfersystems für ein dichtes Gehäuse, wobei das dichte Gehäuse ein erstes geschlossenes Volumen definiert und mindestens eine dichte Verbindungsvorrichtung für die Achse (X1) aufweist, die dazu bestimmt ist, das erste geschlossene Volumen mit einem zweiten geschlossenen Volumen zu verbinden, wobei das Transfersystem dazu bestimmt ist, in dem Gehäuse angeordnet zu sein, wobei das Transfersystem Folgendes aufweist:
- ein Fallrohr (14), wobei das Fallrohr (14) Folgendes aufweist:
- ein Andockende (17) mit Längsachse (X2), das so konfiguriert ist, dass es mit der dichten Verbindungsvorrichtung zusammenarbeitet; und
- ein Ausgießende (18),
- eine Gelenkvorrichtung für das Fallrohr, die dazu bestimmt ist, das Fallrohr innerhalb des ersten geschlossenen Volumens zu bewegen, wobei die Gelenkvorrichtung einen ersten Arm und einen zweiten Arm, ein erstes Drehgelenk zwischen einem ersten Ende des ersten Arms und einem ersten Ende des zweiten Arms, ein zweites Drehgelenk an einem zweiten Längsende des ersten Arms, das dazu bestimmt ist, eine Drehbewegung des ersten Arms in Bezug zu dem Inneren des ersten geschlossenen Volumens zu ermöglichen, und ein drittes Drehgelenk (30) zwischen dem zweiten Arm (24) und dem Fallrohr (14) aufweist,
- einen ersten Elektromotor zum Drehen des zweiten Arms in Bezug auf den ersten Arm,
- einen zweiten Elektromotor zum Drehen des ersten Arms in Bezug auf das Gehäuse,
- einen dritten Elektromotor (M3) zum Drehen des Fallrohrs (14) in Bezug auf den zweiten Arm (24), wobei das Betätigungsverfahren eine Annäherungsphase des Fallrohrs (14) an die Verbindungsvorrichtung aufweist, um das Fallrohr (14) in eine Andockposition zu bringen, und eine Entfernungsphase des Fallrohrs (14) von der Verbindungsvorrichtung (D), um das Fallrohr (14) in eine Ruheposition zu bringen, wobei das Fallrohr in Translation über einen Abstand ungleich Null bewegt wird, sodass die Achse (X2) des Andockendes des Fallrohrs kollinear zur Achse (X1) der Verbindungsvorrichtung am Ende der Annäherungsphase und am Beginn der Entfernungsphase ist.

13. Betätigungsverfahren nach Anspruch 12, wobei das Gehäuse eine Vorrichtung zur Erzeugung eines Laminarstroms entlang der Wand mit der dichten Verbindungsvorrichtung aufweist, wobei am Ende der Entfernungsphase das Fallrohr (14) so angeordnet ist, dass es sich in der Achse des Laminarstroms befindet.

## Claims

1. A transfer system for a sealed enclosure, said sealed enclosure defining a first closed volume and including at least one sealed connection device with an axis (X1) intended to connect the first closed volume to a second closed volume, said transfer system being intended to be disposed in said enclosure, said transfer system including:
- a chute (14), said chute (14) including:
- a docking end (17) with a longitudinal axis (X2) configured to cooperate with the sealed connection device; and
- a spill end (18),
- a device for actuating the chute intended to move the chute inside the first closed volume, said hinge device including a first arm (22) and a second arm (24), a first pivot hinge (26) between a first end of the first arm and a first end of the second arm (24), a second pivot hinge (28) on a second longitudinal end of the first arm (22) intended to enable a rotational movement of the first arm (22) relative to the interior of the first closed volume and a third pivot hinge (30) between the second arm (24) and the chute (14),
- a first electric motor (M1) for moving the second arm (24) in rotation relative to the first arm (22),
- a second electric motor (M2) for moving the first arm (22) in rotation relative to the enclosure,
- a third electric motor (M3) for moving the chute (14) in rotation relative to the second arm (24),
- means (UC) for controlling at least of the first (M1), second (M2) and third (M3) motors configured so that the trajectory of the chute (14) includes, at least at the end of the phase of approaching the connection device (D) and at the beginning of the phase of moving away from the connection device (D), a portion of a translational movement over a non-zero distance during which the axis (X2) of the docking end and the axis (X1) of the device connection are collinear.

2. The transfer system according to claim 1, wherein the first motor (M1) is integrated in the first pivot hinge (26) and/or the second motor (M2) is integrated in the second pivot hinge (28) and/or the third motor (M3) is integrated in the third pivot hinge (30).

3. The transfer system according to one of claims 1 or 2, wherein the first arm and/or the second arm is or are bent.

4. The transfer system according to one of claims 1 to 3, wherein the chute (14) is removably mounted on the second arm (24).

5. An enclosure defining a first closed volume and including a transfer system according to one of the preceding claims and a device (D) for sealed connection to a second closed volume, said connection device (D) being mounted in a wall (4) of said enclosure, said connection device including a flange and a door.

6. The enclosure according to claim 5, wherein the hinge device is fastened on a flange of the connection device.

7. The enclosure according to claim 6, wherein the flange includes a passage between the interior and the exterior of the enclosure and through which pass means for electrical connection of the motors.

8. The enclosure according to claim 7, wherein the connection device includes automated means for opening a latch of the door and for pivoting the door activated by at least one motor and means for electrical connection of said at least one motor pass through said passage.

9. The enclosure according to one of claims 6 to 8, including a system for generating a laminar flow located on one side of the connection device and wherein the hinge device is fastened in the enclosure opposite the system for generating a laminar flow with respect to the connection device.

10. The enclosure according to claim 5, wherein the hinge device is fastened on a wall different from that in which the connection device is mounted.

11. The enclosure according to one of claims 6 to 10, including means (S) for detecting the configuration of the transfer system and/or of the open state of the connection device.

12. A method for actuating a transfer system for a sealed enclosure, said sealed enclosure defining a first closed volume and including at least one sealed connection device with an axis (X1) intended to connect the first closed volume to a second closed volume, said transfer system being intended to be disposed in said enclosure, said transfer system including:
- a chute (14), said chute (14) including:
- a docking end (17) with a longitudinal axis (X2) configured to cooperate with the sealed connection device; and
- a spill end (18),
- a device for actuating the chute intended to move the chute inside the first closed volume, said hinge device including a first arm and a second arm, a first pivot hinge between a first end of the first arm and a first end of the second arm, a second pivot hinge on a second longitudinal end of the first arm intended to enable a rotational movement of the first arm relative to the interior of the first closed volume and a third pivot hinge (30) between the second arm (24) and the chute (14),
- a first electric motor for moving the second arm in rotation relative to the first arm,
- a second electric motor for moving the first arm in rotation relative to the enclosure,
- a third electric motor (M3) for moving the chute (14) in rotation relative to the second arm (24),
said actuation method including a phase of approaching the chute (14) of the connection device to set the chute (14) in a docking position, and a phase of moving the chute (14) away from the connection device (D) to set the chute (14) in a rest position, the chute being moved in translation over a non-zero distance so that the axis (X2) of the docking end of the chute is collinear with the axis (X1) of the connection device at the end of the approach phase and at the beginning of the separation phase.

13. The actuation method according to claim 12, the enclosure including a device for generating a laminar flow along the wall including the sealed connection device, in which method at the end of the separation phase the chute (14) is disposed so as to be in the axis of the laminar flow.
